# EUROPÄISCHE PATENTSCHRIFT

(11) **EP 3 362 400 B1**
(45) Veröffentlichungstag und Bekanntmachung des Hinweises auf die Patenterteilung: **11.09.2019**
(21) Anmeldenummer: 16794205.1
(22) Anmeldetag: 14.10.2016
(51) Int. Cl.: B66C 23/90, B66C 13/40, B66C 23/42, B66C 23/00, B66C 23/70, B66F 11/04, B60P 1/54

(54) **ANORDNUNG AUS EINER STEUERUNG UND EINEM MOBILEN STEUERUNGSMODUL**
ARRANGEMENT OF A CONTROL DEVICE AND A MOBILE CONTROL MODULE
ARRANGEMENT D'UN DISPOSITIF DE COMMANDE ET UN MODULE DE COMMANDE MOBILE

(30) Priorität: 16.10.2015 AT 30215 U
(43) Veröffentlichungstag der Anmeldung: 22.08.2018
(73) Patentinhaber: Palfinger AG, 5101 Bergheim (AT)
(72) Erfinder: HANGÖBL, Michael, 5132 Geretsberg (AT)
(74) Vertreter: Torggler & Hofinger Patentanwälte
(86) Internationale Anmeldenummer: PCT/AT2016/060078
(87) Internationale Veröffentlichungsnummer: WO 2017/063015

(56) Entgegenhaltungen:
- EP-B1- 1 313 664
- AT-U1- 14 237
- CN-A- 103 204 442
- DE-U1-202010 014 310
- JP-A- 2000 063 078
- JP-A- 2002 326 784
- JP-A- 2008 127 129
- US-A1- 2015 149 026

## Beschreibung

Die vorliegende Erfindung betrifft eine Anordnung aus einer an einer hydraulischen Hebevorrichtung angeordneten oder anzuordnenden Steuerung und einem mobilen Steuerungsmodul mit den Merkmalen des Oberbegriffs des Anspruchs 1 und eine hydraulische Hebevorrichtung mit einer solchen Anordnung.

Die EP 1 313 664 B1 zeigt ein redundantes Sicherheitssystem einer fahrbaren Arbeitsbühne mit Sensoren zur Erfassung von Betriebsparametern der Arbeitsbühne.

Die AT 14 237 U1 zeigt eine Kransteuerung mit einer menügeführten Benutzerschnittstelle, wobei die menügeführte Benutzerschnittstelle eine durch den Benutzer wählbare Funktion aufweist, durch welche die Kransteuerung von einem ersten in einen zweiten Betriebsmodus wechselt.

Die US 2015/149026 A1 zeigt ein ein System zur Überwachung eines Krans mit einem Sensor, insbesondere einem Beschleunigungssensor, und einer Einrichtung zur Auswertung der Sensordaten.

Die JP 2000 063078 A zeigt eine Steuereinrichtung für einen Kran, wobei für den Arbeitsbereich des Krans eine Höhen- und Radiusbegrenzung vorgebbar ist und die Werte für die Höhen- und Radiusbegrenzung auf der Steuereinrichtung anzeigbar sind.

Die JP 2008 127129 A zeigt eine Vorrichtung zur Verarbeitung von Wartungsinformationen für Verschleißteile eines Krans, wobei von der Vorrichtung Informationen zum Arbeitseinsatz der Verschleißteile erfasst und gespeichter werden.

Die JP 2002 0326784 A zeigt ein Verfahren zum Betrieb eines Krans, bei welchem Informationen zum Arbeitszustand des Krans zur Überwachung des Arbeitszustands an eine von dem Kran gesonderte Einrichtung übermittelt werden.

Die CN 103 204 442 A zeigt eine Vorrichtung zur Überwachung der Verformung eines Turmdrehkrans.

Aus der DE 20 2010 014 310 U1 ist beispielsweise ein Kran mit einer Steuerung bekannt, wobei die Steuerung einen Betriebsmodus zur Simulation von Arbeitsvorgängen aufweist, in welchem das Verfahren des Krans in verschiedene Stellungen simuliert werden kann. Währen einer solchen simulierten Testfahrt kann das Erreichen eines Grenzwerts, beispielsweise eines Last-Moment-Grenzwerts, auf einer in der Steuerung integrierten Anzeige angezeigt werden. Nachteilig an einer solchen Steuerung ist, dass die Eingabe von Steuerbefehlen und die Anzeige der Simulation an den Standort der integrierten Steuerung gebunden sind. Zudem gestaltet sich die Simulation einer Testfahrt zeitaufwändig.

Aufgabe der Erfindung ist die Bereitstellung einer Anordnung aus einer Steuerung und einem mobilen Steuerungsmodul und einer hydraulischen Hebevorrichtung mit einer solchen Anordnung, bei welchen die zuvor genannten Nachteile nicht auftreten.

Diese Aufgabe wird durch eine Anordnung mit den Merkmalen des Anspruchs 1 und eine hydraulischen Hebevorrichtung mit einer solchen Anordnung gelöst. Vorteilhafte Ausführungsformen der Erfindung sind in den abhängigen Ansprüchen definiert.

Die Aufgabe wird erfindungsgemäß dadurch gelöst, dass die Steuerung einen Betriebsmodus aufweist, in welchem am mobilen Steuerungsmodul Parameter für eine weitere Stellung der Hebevorrichtung und/oder für eine von der Hebevorrichtung angehobene oder anzuhebende Hublast eingebbar sind und aus diesen Parametern und den hinterlegten Daten zweite Informationen, welche für weitere Stellung und/oder für die von der Hebevorrichtung angehobene oder anzuhebende Hublast charakteristisch sind, berechnet und mit den ersten Informationen verglichen werden, wobei die Berechnung und der Vergleich durch den Prozessor der Steuerung erfolgt und wobei das mobile Steuerungsmodul und die Steuerung drahtlos und/oder kabelgebunden miteinander kommunizieren.

Unter einer mobilen Steuerung bzw. einem mobilen Steuerungsmodul kann eine eigenständige (gegebenenfalls tragbare) Bedieneinheit verstanden werden, mit welcher sich ein Benutzer im Wesentlichen frei in einem gewissen Umfeld um einen Kran bzw. eine hydraulische Hebevorrichtung bewegen kann. Selbstverständlich können zwischen einem solchen mobilen Steuerungsmodul und dem Kran bzw. der hydraulischen Hebevorrichtung (speziell mit dessen bzw. deren Steuerung) Daten bzw. Informationen ausgetauscht werden.

Durch die Aufbereitung und Interpretation der Sensordaten in der stationären, an der hydraulischen Hebevorrichtung angeordneten oder anzuordnenden Steuerung kann von Prozessoren mit hoher Rechenleistung Gebrauch gemacht werden, ohne dass deren elektrische Leistungsaufnahme vordergründig in Betracht gezogen werden muss.

Die Sensordaten können beispielsweise von Drucksensoren, Drehgebern, Dehnungsmesstreifen, Wegmesseinrichtungen, Neigungsaufnehmern oder Schaltern stammen, welche jeweils an Teilen der Hebevorrichtung, wie etwa Hydraulikzylindern, Dreh- oder Knickgelenken, Rahmenteilen oder Schubarmen, angeordnet sind.

Die für die Stellung der Hebevorrichtung charakteristischen ersten Informationen können beispielweise die aktuelle Abstützsituation, Geometrie oder auch Ausstattung der Hebevorrichtung, sowie die Auslastung durch eine angehobene oder anzuhebende Last miteinbeziehen. Die ersten Informationen können somit die aktuelle Stellung, die aktuelle Hublastsituation und/oder die Erlaubbarkeit von Arbeitsvorgängen an der Hebevorrichtung, auch unter Einbeziehung der gegebenen aktuellen Hublast, charakterisieren. Für deren Berechnung können in einem Speicher hinterlegte, für die genaue Ausbildung der Hebevorrichtung spezifische Daten, die beispielsweise auch Grenzwerte für Betriebsparameter der Hebevorrichtung umfassen, berücksichtigt werden.

Über geeignete Eingabemittel können am mobilen Steuerungsmodul Parameter für eine weitere Stellung der Hebevorrichtung und/oder für eine von der Hebevorrichtung angehobene oder anzuhebende Hublast eingeben werden, wobei die eingegebenen Parameter dabei eine von einem Benutzer gewünschte Stellung der Hebevorrichtung und/oder eine gewünschte von der Hebevorrichtung angehobene oder anzuhebende Hublast wiederspiegeln können.

In einem dafür geeigneten Betriebsmodus der Steuerung können die am mobilen Steuerungsmodul eingegebenen Parameter an die Steuerung übermittelt werden. Ausgehend von diesen übermittelten Parametern können durch den Prozessor der Steuerung und den im Speicher der Steuerung hinterlegten, für die Hebevorrichtung spezifischen Daten zweite Informationen berechnet werden. Analog zu den ersten Informationen sind diese zweiten Informationen charakteristisch für die durch die eingegebenen Parameter charakterisierte Stellung und/oder für die von der Hebevorrichtung angehobene oder anzuhebende Hublast. Die zweiten Informationen können hinsichtlich ihrer Erlaubbarkeit im Sinne der für die Hebevorrichtung geltenden Grenzwerte, welche in den spezifischen Daten enthalten sind, beurteilt werden. Zudem können diese mit den ersten Informationen verglichen werden, um zu beurteilen, ob die weitere Stellung ausgehend von der ersten Stellung der Hebevorrichtung erreichbar ist. Eine Auswertung eines Vergleichs kann in Folge an das mobile Steuerungsmodul übermittelt werden.

Eine Übermittlung von Daten zwischen dem mobilen Steuerungsmodul und der Steuerung kann dabei jeweils drahtlos und/oder kabelgebunden erfolgen. Eine kabelgebundene Übertragung der Informationen kann beispielweise stattfinden, wenn sich ein Benutzer in einem gewissen Umkreis um die an einer hydraulischen Hebevorrichtung angeordnete oder anzuordnende Steuerung befindet. Bei besonders sicherheitsrelevanten Steuervorgängen kann dies auch ein Erfordernis zur Erlaubbarkeit der vom Benutzer über das mobile Steuerungsmodul abgegebenen Steuerbefehle sein.

Bei der Hebevorrichtung kann es sich dabei um einen Kran, beispielsweise einen an einem Fahrzeug anordenbaren Ladekran, oder auch eine Hubarbeitsbühne handeln.

Als vorteilhaft hat sich herausgestellt, dass das mobile Steuerungsmodul Aktivierungsmöglichkeiten zur Aktivierung des Betriebsmodus aufweist, welche durch einen Benutzer bedienbar sind. Dadurch kann der Betriebsmodus, beispielsweise durch einen Benutzer, zu einem gewünschten Zeitpunkt bzw. für eine gewünschte Zeitdauer aktiviert werden.

Weiter kann vorgesehen sein, dass das mobile Steuermodul einen Energiespeicher aufweist und eine Aktivierung des Betriebsmodus nur bei einem Mindestladestand des Energiespeichers erfolgen kann. Dadurch kann verhindert werden, dass durch einen Wechsel in den Betriebsmodus- und den damit eventuell verbundenen erhöhten Energieaufwand - das mobile Steuermodul beispielsweise bei einem bereits geringen Ladestand des Energiespeichers durch eine weitere, beschleunigte Entladung funktionsunfähig wird.

Weiter kann vorteilhaft sein, dass der Vergleich Informationen über die Durchführbarkeit einer Überführung der hydraulischen Hebevorrichtung in die von den eingegebenen Parametern charakterisierte weitere Stellung und/oder angehobene oder anzuhebende Hublast umfasst. Dabei kann durch den Prozessor der Steuerung ermittelt werden, ob die weitere Stellung bei Einhaltung der für die Hebevorrichtung geltenden Grenzwerte für Betriebsparameter und unter Berücksichtigung der Ausstattung der Hebevorrichtung erreicht werden kann. Dies kann auch eine Beurteilung beinhalten, ob die weitere Stellung und Auslastung ausgehend von der aktuellen Stellung und Auslastung erreichbar ist.

Weiter kann vorteilhaft sein, dass bei einer Aktivierung des Betriebsmodus die ersten Informationen an das mobile Steuerungsmodul übermittelt werden. Diese können dann als Basis für die einzugebenden Parameter für die weitere Stellung dienen und auch einem Benutzer, beispielsweise mittels einer Anzeige, zugänglich gemacht werden.

Es kann vorgesehen sein, dass ein Prozessor des mobilen Steuerungsmoduls aus dem Vergleich und/oder den ersten Informationen Grafikdaten für eine Darstellung berechnet, die über eine Darstellungseinheit für einen Benutzer darstellbar ist. Diese Berechnung kann dabei beispielsweise eine Skalierung, eine Auswahl und/oder Zusammenstellung von im Steuerungsmodul hinterlegten Symbolen oder Grafiken oder eine Einbindung von berechneten Grafikdaten in hinterlegte Hintergrundgrafiken umfassen. Die Darstellungseinheit kann ein Display in Form beispielsweise einer Flüssigkristallanzeige, eines LED-Displays oder auch eines OLED-Displays aufweisen. Bei einer Darstellung der ersten Informationen kann einem Benutzer die momentane Stellung und ggf. die momentan angehobenen Hublast der Hebevorrichtung angezeigt werden. Bei einer Darstellung des Vergleichs kann einem Benutzer die Beurteilung der weiteren Stellung und/oder die Beurteilung der Durchführbarkeit einer Überführung der Hebevorrichtung in die weitere Stellung angezeigt werden.

Vorteilhaft kann dabei sein, dass die Darstellung in Form einer Signalanzeige, eines Piktogramms oder einer Textausgabe erfolgt. So kann die Darstellung intuitiv verständlich und mit geringem Aufwand erfolgen.

Weiter kann vorgesehen sein, dass die Eingabe der Parameter über eine Maske mit Eingabefeldern am mobilen Steuerungsmodul erfolgt. So kann die Eingabe einfach gestaltet werden und die Parameter können zeitsparen eingegeben werden.

Es kann vorgesehen sein, dass die Parameter die Hubhöhe, die Reichweite und die aktuelle oder eine frei wählbare Hublast umfassen. Als Hubhöhe kann dabei der vertikale Abstand der Kranspitze, also dem äußersten Ende des Kranarms oder einer daran angeordneten Verlängerung, oder der vertikale Abstand einer vom Kran angehobenen oder anzuhebenden Hublast von einer Referenzebene des Krans, beispielsweise von der Unterkante des Kransockels, bei einem gegebenen Schwenkwinkel verstanden werden. Alternativ dazu kann der Parameter der Hubhöhe einen vertikalen Abstand der Kranspitze oder einer Hublast relativ zur aktuellen Kranposition oder Position der Hublast charakterisieren. Analog dazu kann der Parameter der Reichweite den horizontalen Abstand der Kranspitze oder den horizontalen Abstand einer vom Kran angehobenen oder anzuhebenden Hublast von der Schwenkachse, genauer von der im Wesentlichen vertikal gelegenen Schwenkachse der Kransäule am Kransockel, bei einem gegebenen Schwenkwinkel charakterisieren, oder auch alternativ dazu einen horizontalen Abstand der Kranspitze oder einer Hublast relativ zur aktuellen Kranposition oder Position der Hublast. Auch ist denkbar, dass die Parameter einen Koordinatensatz in einem räumlichen oder ebenen Koordinatensystem, beispielsweise in Kugelkoordinaten, Zylinderkoordinaten oder Kartesischen Koordinaten, umfassen. Eine Charakterisierung der Reichweite kann dabei auch getrennt von der Charakterisierung der Hubhöhe erfolgen. Eine Eingabe und/oder Erfassung von GPS-Koordinaten der Kranspitze oder der Hublast ist ebenso denkbar. Weiter ist denkbar, dass ein Parameter die Stellung eines Teils bzw. einer Baugruppe des Krans charakterisiert, wie beispielsweise die Teleskopstellung einer teleskopierbaren Kranarmverlängerung oder die Drehwinkel- bzw. Knickwinkelstellung eines Kranarms. Mit einem solchen Satz an Parametern lässt sich eine gewünschte Stellung der Hebevorrichtung genau und für einen Benutzer einfach zugänglich charakterisieren.

Weiter kann bevorzugt vorgesehen sein, dass die Steuerung einen weiteren Betriebsmodus aufweist, in welchem von dem Prozessor der Steuerung eine Abfolge von Steuerbefehlen zur Überführung der hydraulischen Hebevorrichtung in die von den eingegebenen Parametern charakterisierte Stellung berechnet wird. Dabei kann vom Prozessor ein Satz an Steuerbefehlen erstellt und ggf. in einem Speicher abgelegt werden, mit welchen die Hebevorrichtung in die weitere Stellung gebracht werden kann. Dabei kann die aktuelle Stellung als Ausgangstellung dienen. Es kann die bei der Überführung um eine Geometrieänderung, einen Hubvorgang oder auch um eine Kombination daraus handeln.

Vorteilhaft kann dabei sein, dass das mobile Steuerungsmodul weitere Aktivierungsmöglichkeiten zur Aktivierung der Berechnung der Steuerbefehle aufweist, welche durch einen Benutzer bedienbar sind. So kann die Berechnung zu einem von einem Benutzer gewünschten Zeitpunkt erfolgen und nicht unnötige Rechenzeit des Prozessors beanspruchen.

Es kann dabei weiter vorgesehen sein, dass das mobile Steuerungsmodul Bedienmöglichkeiten, vorzugsweise einen Bedienhebel, zur Steuerung der Abgabe der Steuerbefehle zur Überführung der hydraulischen Hebevorrichtung in die von den eingegebenen Parametern charakterisierte Stellung aufweist, welche durch einen Benutzer bedienbar sind. Dies kann beispielsweise in Form eines Tasters oder selbstrückstellenden Bedienhebels erfolgen, bei dessen Betätigung die Abfolge der Steuerbefehle, die verschiedenen Teile der Hebevorrichtung betreffen können, von der Steuerung ausgegeben wird. Damit kann die Bedienung der Steuerung stark erleichtert werden.

Vorteilhaft kann dabei sein, dass die Überführung nur bis zu einer nach den ersten Informationen erlaubten Stellung der Hebevorrichtung erfolgt. So kann sichergestellt werden, dass die Hebevorrichtung durch die Überführung nicht in einen im Rahmen der Grenzwerte unerlaubten Zustand gelangt. So kann beispielsweise auch eine Annäherung an eine eigentlich unerlaubte weitere Stellung so weit erfolgen, wie dies im Rahmen der geltenden Grenzwerte für Betriebsparameter zulässig ist.

Dabei kann weiter vorteilhaft sein, dass durch die Bedienmöglichkeiten, vorzugsweise den Bedienhebel, die Geschwindigkeit der Überführung der hydraulischen Hebevorrichtung in die von den eingegebenen Parametern charakterisierte Stellung steuerbar ist. Dies ermöglicht es einem Benutzer, die Rate der Abgabe der Steuerbefehle und so auch die Geschwindigkeit der Geometrieänderung der Hebevorrichtung zu steuern.

Schutz wird auch begehrt für eine hydraulische Hebevorrichtung, insbesondere Ladekran für ein Fahrzeug - besonders bevorzugt Knickarmkran - oder Hubarbeitsbühne, mit einer wie zuvor beschriebenen Anordnung.

Ausführungsbeispiele der Erfindung werden anhand der Figuren diskutiert. Darin zeigen:

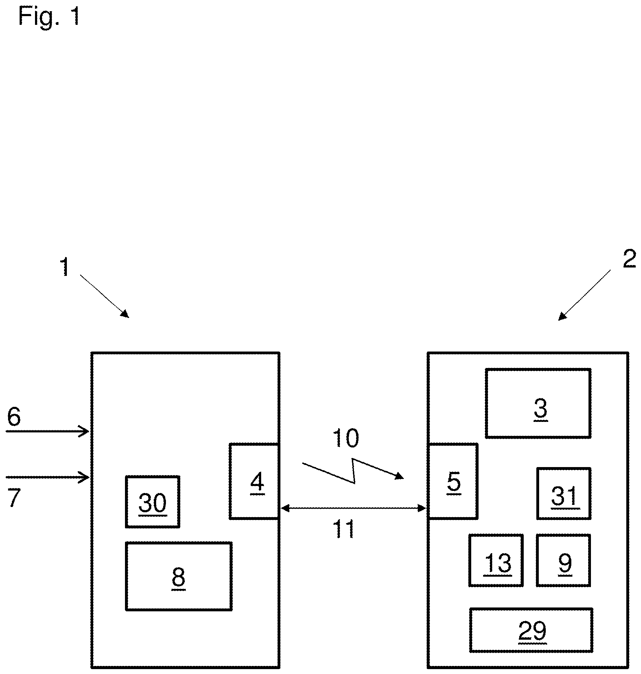

- Fig. 1: eine schematische Darstellung eines Ausführungsbeispiels einer erfindungsgemäßen Anordnung,
- Fig. 2: eine Ausführung einer an einem Fahrzeug angeordneten Hebevorrichtung,
- Fig. 3: eine schematische Darstellung eines Ausführungsbeispiels einer Hebevorrichtung und einer erfindungsgemäßen Anordnung und
- Fig. 4a und 4b: jeweils schematisch eine Darstellung einer Eingabemaske und von aus den zweiten Informationen berechneten Grafikdaten.

Die Steuerung 1 bekommt über Signaleingänge 6, 7 Sensordaten bezüglich der Geometrie der Hebevorrichtung, der Abstützsituation und ggf. der Hublast. In einem Prozessor 8 berechnet die Steuerung 1 aus diesen Daten und aus hinterlegten, für die Hebevorrichtung spezifischen Daten erste Informationen, welche für die aktuelle Hublastsituation, Stellung und/oder die Erlaubbarkeit von Arbeitsvorgängen an der Hebevorrichtung- ggf. bei der gegebenen aktuellen Hublastsituation - charakteristisch sind.

Die Steuerung 1 weist weiter einen Speicher 30 auf, in welchem für die Hebevorrichtung spezifische Daten hinterlegt sein können. Diese können Informationen zu Ausstattung, Funktionen und Grenzwerten von Betriebsparametern der Hebevorrichtung umfassen. Die Berechnung der ersten Informationen, welche für die aktuelle Stellung und Auslastung charakteristisch sind, kann vorteilhaft unter Einbeziehung der im Speicher 30 hinterlegten Daten erfolgen.

Mittels einer Sende- und Empfangseinheit 4 der Steuerung 1 können Daten über eine Drahtlosverbindung 10 oder eine Kabelverbindung 11 an eine Sende- und Empfangseinheit 5 des mobilen Steuerungsmoduls 2 übermittelt werden. Auch eine Kombination aus einer Übermittlung mit einer Drahtlosverbindung 10 und einer Kabelverbindung 11 ist denkbar. Die Drahtlosverbindung 10 kann über mehrere Kanäle und in mehreren Frequenzbändern, auch parallel, Daten senden und empfangen können.

Das mobile Steuerungsmodul 2 weist einen Speicher 31 auf, in welchem die übermittelten Informationen und auch durch einen Prozessor 9 berechnete Grafikdaten für eine Darstellung dieser auf einer Darstellungseinheit 3 abgelegt werden können. Zur Eingabe von Daten durch einen Benutzer können zudem Eingabemittel 13 vorgesehen sein.

Zur Energieversorgung weist das mobile Steuerungsmodul 2 einen Energiespeicher 29, beispielsweise in Form eines wiederaufladbaren Akkumulators auf. Die Energieversorgung der Steuerung 1 kann über ein nicht dargestelltes Aggregat der Hebevorrichtung erfolgen.

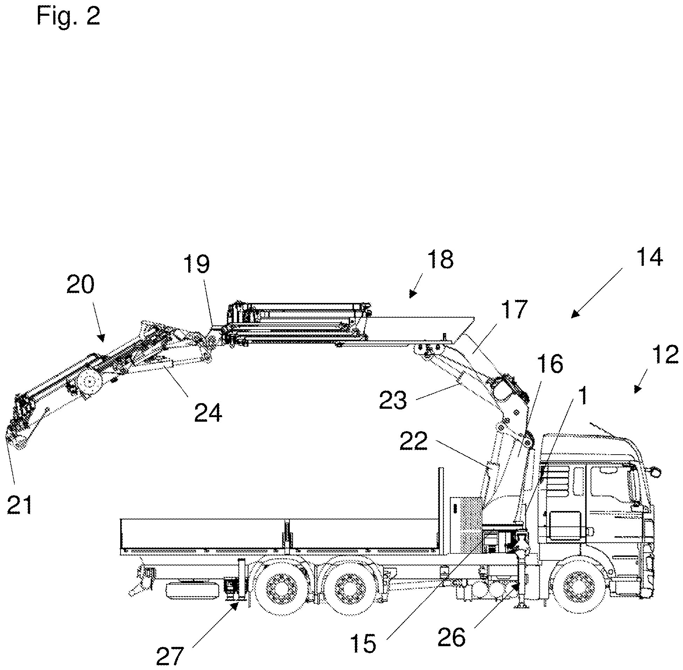

In Fig. 2 ist eine Ausführung einer an einem Fahrzeug 12 angeordneten Hebevorrichtung und einer daran angeordneten Steuerung 1 gezeigt. Das Fahrzeug 12 weist eine Ladefläche zur Aufnahme bzw. auch zum Transport einer Nutzlast bzw. auch eines Ballastgewichts auf. Eine Hebevorrichtung in Form eines Krans 14 ist über den Kransockel 15 mit dem Fahrzeug 12 verbunden. Am Kransockel 15 ist eine um eine vertikale Achse drehbare Kransäule 16 gelagert. An der Kransäule 16 ist ein um eine horizontale Achse mittels eines Hydraulikzylinders 22 verschwenkbarer Hubarm 17 angeordnet. Am Hubarm 17 ist wiederum eine um eine horizontale Achse mittels eines Hydraulikzylinders 23 verschwenkbare Kranarmverlängerung 18 mit zumindest einem teleskopierbaren Kranschubarm 19 angeordnet. Wie in der Ausführung in Fig. 2 gezeigt, kann an der Kranarmverlängerung 18 ein Vorsatzarm 20, der ebenfalls mittels eines Hydraulikzylinders 24 um eine horizontale Achse verschwenkbar ist, angeordnet sein. Ebenso kann der Vorsatzarm 20 zumindest einen teleskopierbaren Kranschubarm 21 aufweisen. Zur zusätzlichen Abstützung des Krans 14 bzw. des die Hebevorrichtung tragenden Fahrzeugs 12 ist eine Abstützvorrichtung in Form der Ausleger 26, 27, welche ausfahrbare, teleskopierbare Stützbeine aufweisen kann, vorgesehen.

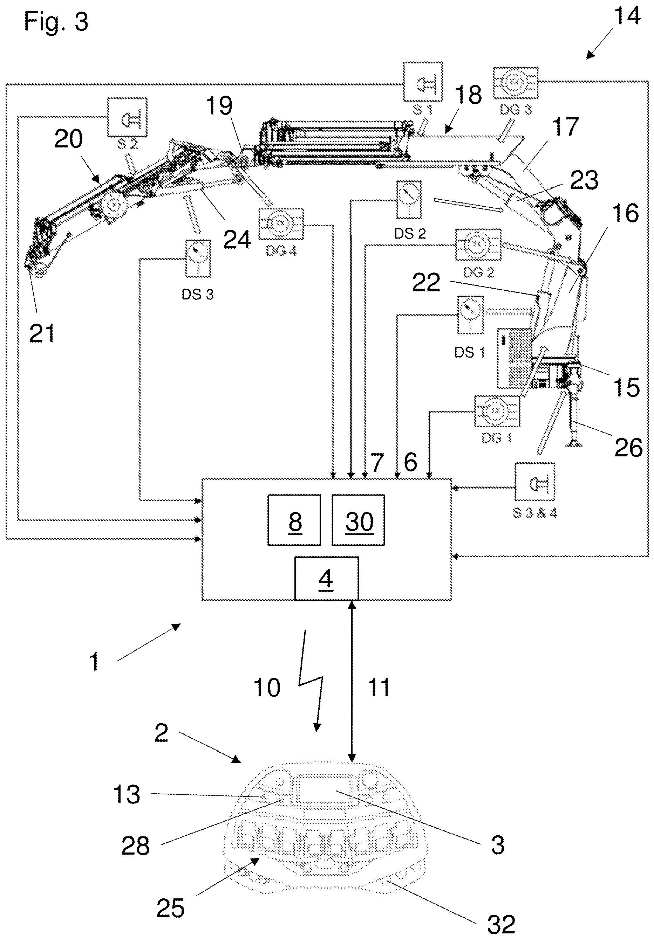

Fig. 3 zeigt eine schematische Darstellung eines Ausführungsbeispiels einer Hebevorrichtung und einer erfindungsgemäßen Anordnung aus einer Steuerung 1 und einem mobilen Steuermodul 2. Die Hebevorrichtung in Form eines Krans 14 weist dabei neben den zuvor genannten Komponenten diverse Sensoren zur Erfassung der momentanen Stellung und Auslastung des Krans 14 auf. Für den Ausleger 26, der beidseitig am Kransockel 15 ausgebildet sein kann, sind Schalter S3, S4 zur Erfassung des Abstützzustands des Auslegers 26 am Boden vorgesehen. In ähnlicher Weise kann eine solche Sensorik für den hier nicht gezeigten Ausleger 27, welcher an einem Rahmenteil des Fahrzeugs 12 angeordnet sein kann, vorgesehen sein. Auch ist denkbar, dass die Ausfahrstellung der Ausleger 26, 27 über eine hier nicht gezeigte Wegmesseinrichtung erfasst wird. Zur Erfassung des Drehwinkels bzw. Schwenkwinkels der Kransäule 16 relativ zum Kransockel 15 ist ein Drehgeber DG1 vorgesehen. Der vom Drehgeber DG1 erfasste Drehwinkel der Kransäule 16 um eine vertikale Achse würde in einer Polardarstellung dem Polarwinkel entsprechen. Zur Erfassung des Knickwinkels in einer vertikalen Ebene zwischen der Kransäule 16 und dem Hubarm 17 ist ein weiterer Drehgeber DG2 vorgesehen. Der für die Kranauslastung charakteristische Hydraulikdruck im Hydraulikzylinder 22 des Hubarms 17 ist ein Drucksensor DS1 vorgesehen. Zur Erfassung des Knickwinkels zwischen dem Hubarm 17 und der Kranarmverlängerung 18 in einer vertikalen Ebene ist ein Drehgeber DG3 vorgesehen. Zur Erfassung des Hydraulikdrucks im Hydraulikzylinder 23 der Kranarmverlängerung 18 ist ein Drucksensor DS2 vorgesehen. Zur Erfassung des Einfahrzustands eines Kranschubarms 19 der Kranarmverlängerung 18 ist ein Schalter S1 vorgesehen. Weiter ist zur Erfassung des Knickwinkels zwischen der Kranarmverlängerung 18 und dem Vorsatzarm 20 in einer vertikalen Ebene ein Drehgeber DG4 vorgesehen. Zur Erfassung des Hydraulikdrucks des Hydraulikzylinders 24 des Vorsatzarms 20 ist ein Drucksensor DS3 vorgesehen. Zur Erfassung des Einfahrzustands eines Kranschubarms 21 des Vorsatzarms 20 ist ein Schalter S2 vorgesehen. Grundsätzlich soll nicht ausgeschlossen sein, dass die Schubstellung der einzelnen Kranschubarme über einen Schubstellungssensor mit beispielsweise einer Wegmesseinrichtung erfasst wird. So lassen sich durch eine Erfassung der Geometrie der Hebevorrichtung und durch Messung weiterer Betriebsparameter, wie etwa des Hydraulikdrucks in den Hubzylindern, die horizontale Auslagerung, Hubhöhe und die angehobenen Hublast bestimmen.

Die Sensordaten werden der Steuerung 1 jeweils über Signaleingänge, von denen exemplarisch die Signaleingänge 6, 7 des Drucksensors DS1 und des Drehgebers DG2 bezeichnet sind, zugeführt. In der Steuerung 1 werden dann aus diesen Sensordaten und aus in einem Speicher 30 hinterlegten, in diesem Beispiel für den Kran 14 spezifischen Daten, erste Informationen berechnet, die für die aktuelle Kranstellung und ggf. auch für die momentan angehobene Hublast charakteristisch sind. Über eine Sende- und Empfangseinheit 4 der Steuerung 1 können diese Informationen dann über eine Drahtlosverbindung 10 und/oder eine kabelgebundene Verbindung 11 an eine Sende- und Empfangseinheit 5 eines mobilen Steuermoduls 2 übermittelt werden. Aus diesen Informationen können in einem geeigneten Betriebsmodus im mobilen Steuerungsmodul 2 Grafikdaten für eine Darstellung berechnet werden und über eine Darstellungseinheit 3 für einen Benutzer dargestellt werden. Eine Aktivierung des Betriebsmodus kann gegebenenfalls über eine von einem Benutzer betätigbare Aktivierungsmöglichkeit 28, beispielsweise in Form eines Schalters oder eines Tasters, erfolgen. Eine Aktivierung des Betriebsmodus am mobilen Steuerungsmodul 2 kann optional der Steuerung 1 mitgeteilt werden, woraufhin diese die ersten Informationen an das mobile Steuerungsmodul 2 übermittelt. Diese können dann in aufbereiteter Form auf der Darstellungseinheit 3 dargestellt werden. Alternativ dazu ist denkbar, dass eine Übermittlung und Darstellung der ersten Informationen von einem Benutzer aktiv angefordert werden kann. Die Darstellung der ersten Informationen, die beispielsweise die Hubhöhe, die Reichweite und die aktuelle Hublast des Krans 14 umfassen kann, kann einem Benutzer Aufschluss über die momentane Kranstellung geben.

Zur Eingabe von Daten, wie beispielsweise der eine gewünschte weitere Stellung des Krans 14 charakterisierenden Parameter, kann das mobile Steuerungsmodul 2 geeignete Eingabemittel 13 aufweisen. Zur Bedienung des mobilen Steuermoduls 2 und zur Eingabe von Steuerbefehlen sind am mobilen Steuermodul 2 diverse Bedienelemente 25 vorgesehen. Auch kann eine Bedienmöglichkeit 32 in Form beispielsweise eines auslenkbaren Bedienhebels vorgesehen sein, welche zur Ausführung von halb-automatisierten Bewegungsabläufen des Krans 14 als ein Meisterschalter dienen kann.

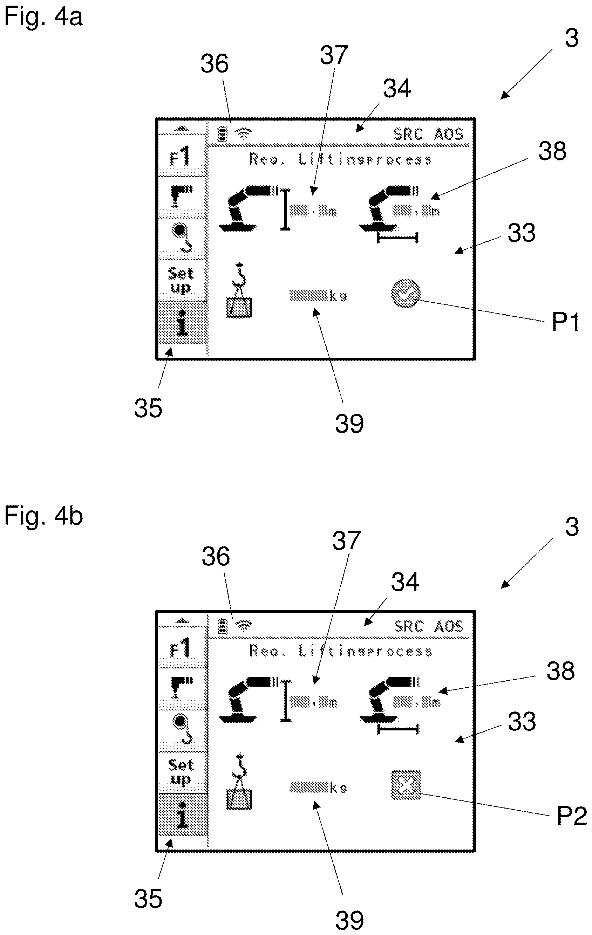

In Fig. 4a ist eine schematische Darstellung einer auf einer Darstellungseinheit 3 angezeigten Eingabemaske 33 dargestellt. Das mobile Steuermodul 2 befindet sich dabei im geeigneten Betriebsmodus zur Abfrage der Durchführbarkeit eines Hebevorgangs. Die Darstellungseinheit 3 kann beispielsweise von einer grafikfähigen Flüssigkristallanzeige, welche in oder am mobilen Steuerungsmodul 2 angebracht oder anbringbar ist, ausgebildet sein. In der gezeigten Ausführung umfasst die Darstellung auf der Darstellungseinheit 3 eine Menüleiste 35, über welche auf Einstellungen, Informationen oder alternative Funktionen zugegriffen werden kann, und eine Titelleiste 34 mit etwa einer Statusanzeige 36, welche Aufschluss über den Ladezustand des Energiespeichers 29 oder auch Art und Qualität der Datenverbindung geben kann.

Die Eingabemaske 33 umfasst weiter Eingabefelder 37, 38, 39, in welche zur Abfrage der Zulässigkeit einer gewünschten weiteren Stellung des Krans 14 die die Stellung charakterisierenden Parameter eingegeben werden. Dabei kann die gewünschte Hubhöhe der angehobenen oder anzuhebenden Hublast in das Eingabefeld 37 für die Hubhöhe eingegeben werden. Die gewünschte horizontale Auslagerung des Krans 14 kann in das Eingabefeld 38 der Reichweite eingegeben werden. Die Hubhöhe und Reichweite können dabei unabhängig voneinander gewählt werden. Eine gewünschte anzuhebende Hublast kann in das Eingabefeld 39 eingegeben werden. Dies kann auch in gewissen Inkrementen, also beispielsweise in Schritten von 50 Kilogramm, erfolgen. Bei Freilassen des Eingabefelds 39 für die Hublast oder der Eingabe des Werts Null kann das aktuell am Kran 14 erfasste Gewicht der Hublast verwendet werden. Es kann vorgesehen sein, dass die ersten, für die momentane Stellung des Krans 14 charakteristischen Informationen in Form der aktuellen Hubhöhe, Reichweite und der aktuell angehobenen Last in den Eingabefeldern 37, 38, 39 vor der Eingabe der gewünschten Parameter angezeigt werden.

Nach erfolgter Eingabe der Parameter werden diese drahtlos 10 und/oder kabelgebunden 11 an die Steuerung 1 übermittelt. Dort werden durch den Prozessor 8 aus den im Speicher 30 hinterlegten, kranspezifischen Daten und den eingegebenen Parametern zweite Informationen berechnet, die charakteristisch für die weitere Stellung des Krans 14 sind. Diese können die Erlaubbarkeit der Stellung des Krans 14 im Rahmen der zulässigen Grenzwerte und Fähigkeiten des Krans 14 beinhalten. Die zweiten Informationen können vom Prozessor 8 mit den ersten Informationen verglichen werden. Daraus kann eine Beurteilung der Durchführbarkeit eines Hebevorgangs von der aktuellen Stellung des Krans 14 in die gewünschte, durch die eingegebenen Parameter charakterisierte weitere Stellung des Krans 14 erfolgen. Die Auswertung des Vergleichs kann dann wieder drahtlos 10 und/oder kabelgebunden 11 zurück an das mobile Steuermodul 2 übermittelt werden. Dort kann der Prozessor 9 des mobilen Steuerungsmoduls 2 aus dem Vergleich Grafikdaten für eine Darstellung berechnet, die über die Darstellungseinheit 3 für einen Benutzer darstellbar ist. Diese Berechnung kann dabei beispielsweise eine Auswahl und/oder Zusammenstellung von im Steuerungsmodul 2 hinterlegten Piktogrammen P1, P2 und eine Einbindung der berechneten Grafikdaten in hinterlegte Hintergrundgrafiken umfassen. In Figur 4a die Darstellung des Piktogramms P1 gezeigt, welches eine positive Auswertung zur Durchführbarkeit des gewünschten Hebevorgangs symbolisiert. Figur 4b hingegen zeigt die Darstellung des Piktogramms P2, welches eine negative Beurteilung der Durchführbarkeit des Hebevorgangs, also eine im Rahmen der Grenzwerte unerlaubte weitere Stellung, symbolisiert.

Nach oder bei positiver Beurteilung der Überführbarkeit des Krans 14 von der aktuellen Stellung in die weitere Stellung kann, ggf. durch Betätigung der weiteren Aktivierungsmöglichkeiten 28 durch eine Benutzer, vom Prozessor 8 der Steuerung eine Abfolge an Steuerbefehlen berechnet werden, mittels welcher der Kran 14 sich in die gewünschte Stellung überführen lässt. Dies kann beispielweise das Verschwenken und Teleskopieren der Kran- und Kranschubarme des Krans 14 und/oder ein Anheben oder Absenken einer Hublast durch den Kran 14 in einer bestimmten Reihenfolge umfassen. Die Abgabe der Steuerbefehle durch die Steuerung 1 an den Kran 14 kann durch eine Bedienmöglichkeit 32 erfolgen, beispielweise durch Auslenkung eines als Meisterschalter dienenden Bedienhebels am mobilen Steuerungsmodul 2. Die Geschwindigkeit der Überführung des Krans 14 in die weitere Stellung kann dabei der Betätigung der Bedienmöglichkeit 32, also beispielsweise der Hebelauslenkung, proportional sein. Es ist natürlich von Vorteil, wenn die Überführung des Krans 14 in die weitere Stellung zu jedem Zeitpunkt unter Einhaltung der geltenden, in den ersten Informationen beinhalteten Grenzwerte des Krans 14 erfolgt.

### Bezugszeichenliste:

| | |
|---|---|
| Steuerung | 1 |
| Steuerungsmodul | 2 |
| Darstellungseinheit | 3 |
| Sende-/Empfangseinheit | 4 |
| Sende-/Empfangseinheit | 5 |
| Signaleingang | 6, 7 |
| Prozessor | 8 |
| Prozessor | 9 |
| Drahtlosverbindung | 10 |
| Kabelverbindung | 11 |
| Fahrzeug | 12 |
| Eingabemittel | 13 |
| Kran | 14 |
| Kransockel | 15 |
| Kransäule | 16 |
| Hubarm | 17 |
| Kranarmverlängerung | 18 |
| Kranschubarm | 19 |
| Vorsatzarm | 20 |
| Kranschubarm | 21 |
| Hydraulikzylinder | 22, 23, 24 |
| Bedienelemente | 25 |
| Ausleger | 26, 27 |
| Aktivierungsmöglichkeit | 28 |
| Energiespeicher | 29 |
| Speicher | 30 |
| Speicher | 31 |
| Bedienmöglichkeit | 32 |
| Eingabemaske | 33 |
| Titelleiste | 34 |
| Menüleiste | 35 |
| Statusanzeige | 36 |
| Eingabefeld | 37, 38, 39 |
| Drucksensor | DS1, DS2 |
| Drehgeber | DG1, DG2, DG3, DG4 |
| Schalter | S1, S2, S3, S4 |
| Piktogramm | P1, P2 |

## Patentansprüche

1. Anordnung aus einer an einer hydraulischen Hebevorrichtung angeordneten oder anzuordnenden Steuerung (1) und einem mobilen Steuerungsmodul (2), über welches die Steuerung (1) fernbedienbar ist, wobei der Steuerung (1) über Signaleingänge (6, 7) Sensordaten zuführbar sind und ein Prozessor (8) der Steuerung (1) dazu ausgebildet ist, aus diesen Sensordaten und aus in einem Speicher (30) hinterlegten, für die Hebevorrichtung spezifischen Daten erste Informationen, welche für die aktuelle Stellung der Hebevorrichtung - und ggf. eine von der Hebevorrichtung angehobene Hublast - charakteristisch sind, zu berechnen, wobei die Steuerung (1) einen Betriebsmodus aufweist, in welchem am mobilen Steuerungsmodul (2) Parameter für eine weitere Stellung der Hebevorrichtung und/oder für eine von der Hebevorrichtung angehobene oder anzuhebende Hublast eingebbar sind und aus diesen Parametern und den hinterlegten Daten zweite Informationen, welche für weitere Stellung und/oder für die von der Hebevorrichtung angehobene oder anzuhebende Hublast charakteristisch sind, berechnet und mit den ersten Informationen und/oder den spezifischen Daten verglichen werden, wobei die Berechnung und der Vergleich durch den Prozessor (8) der Steuerung (1) erfolgt und wobei das mobile Steuerungsmodul (2) und die Steuerung (1) drahtlos (10) und/oder kabelgebunden (11) miteinander kommunizieren.

2. Anordnung nach Anspruch 1, wobei das mobile Steuerungsmodul (2) Aktivierungsmöglichkeiten (28) zur Aktivierung des Betriebsmodus aufweist, welche durch einen Benutzer bedienbar sind.

3. Anordnung nach wenigstens einem der Ansprüche 1 oder 2, wobei das mobile Steuermodul (2) einen Energiespeicher (29) aufweist und eine Aktivierung des Betriebsmodus nur bei einem Mindestladestand des Energiespeichers (29) erfolgen kann.

4. Anordnung nach wenigstens einem der vorangehenden Ansprüche, wobei der Vergleich Informationen über die Durchführbarkeit einer Überführung der hydraulischen Hebevorrichtung in die von den eingegebenen Parametern charakterisierte weitere Stellung und/oder angehobene oder anzuhebende Hublast umfasst.

5. Anordnung nach wenigstens einem der vorangehenden Ansprüche, wobei bei einer Aktivierung des Betriebsmodus die ersten Informationen an das mobile Steuerungsmodul (2) übermittelt werden.

6. Anordnung nach wenigstens einem der vorangehenden Ansprüche, wobei ein Prozessor (9) des mobilen Steuerungsmoduls (2) aus dem Vergleich und/oder den ersten Informationen Grafikdaten für eine Darstellung berechnet, die über eine Darstellungseinheit (3) für einen Benutzer darstellbar sind.

7. Anordnung nach Anspruch 6, wobei die Darstellung in Form einer Signalanzeige, eines Piktogramms (P1, P2) oder einer Textausgabe erfolgt.

8. Anordnung nach wenigstens einem der vorangehenden Ansprüche, wobei die Eingabe der Parameter über eine Maske (33) mit Eingabefeldern (37, 38, 39) am mobilen Steuerungsmodul (2) erfolgt.

9. Anordnung nach wenigstens einem der vorangehenden Ansprüche, wobei die Parameter die Hubhöhe, die Reichweite und die aktuelle oder eine frei wählbare Hublast umfassen.

10. Anordnung nach wenigstens einem der vorangehenden Ansprüche, wobei die Steuerung (1) einen weiteren Betriebsmodus aufweist, in welchem von dem Prozessor (8) der Steuerung (1) eine Abfolge von Steuerbefehlen zur Überführung der hydraulischen Hebevorrichtung in die von den eingegebenen Parametern charakterisierte Stellung berechnet wird.

11. Anordnung nach Anspruch 10, wobei das mobile Steuerungsmodul (2) weitere Aktivierungsmöglichkeiten (28) zur Aktivierung der Berechnung der Steuerbefehle aufweist, welche durch einen Benutzer bedienbar sind.

12. Anordnung nach wenigstens einem der Ansprüche 10 oder 11, wobei das mobile Steuerungsmodul (2) Bedienmöglichkeiten (32), vorzugsweise einen Bedienhebel, zur Steuerung der Abgabe der Steuerbefehle zur Überführung der hydraulischen Hebevorrichtung in die von den eingegebenen Parametern charakterisierte Stellung aufweist, welche durch einen Benutzer bedienbar sind.

13. Anordnung nach Anspruch 12, wobei die Überführung nur bis zu einer nach den ersten Informationen erlaubten Stellung der Hebevorrichtung erfolgt.

14. Anordnung nach wenigstens einem der Ansprüche 12 oder 13, wobei durch die Bedienmöglichkeiten (32), vorzugsweise den Bedienhebel, die Geschwindigkeit der Überführung der hydraulischen Hebevorrichtung in die von den eingegebenen Parametern charakterisierte Stellung steuerbar ist.

15. Hydraulische Hebevorrichtung, insbesondere Ladekran (14) für ein Fahrzeug (12) - besonders bevorzugt Knickarmkran - oder Hubarbeitsbühne, mit einer Anordnung nach wenigstens einem der vorangehenden Ansprüche.

## Claims

1. Assembly of a controller (1), which is arranged or to be arranged on a hydraulic lifting device (1), and of a mobile control module (2), by means of which the controller (1) can be remotely operated, wherein sensor data can be fed to the controller (1) via signal inputs (6, 7) and a processor (8) of the controller (1) is designed to calculate first information, which is characteristic of the current position of the lifting device and, if applicable, a lifting load raised by the lifting device, from said sensor data and from data specific to the lifting device that are stored in a memory (30), wherein the controller (1) has an operating mode in which parameters for a further position of the lifting device and/or for a lifting load raised or to be raised by the lifting device can be input at the mobile control module (2) and second information, which is characteristic of the further position and/or the lifting load raised or to be raised by the lifting device, are calculated from said parameters and the stored data and are compared with the first information and/or the specific data, wherein the calculation and the comparison are performed by means of the processor (8) of the controller (1) and wherein the mobile control module (2) and the controller (1) communicate with each other in a wireless (10) and/or wired (11) manner.

2. Assembly according to claim 1, wherein the mobile control module (2) has activation possibilities (28) for activating the operating mode, which can be operated by a user.

3. Assembly according to at least one of claims 1 or 2, wherein the mobile control module (2) has an energy storage (29) and an activation of the operating mode can take place only with a minimum charge level of the energy storage (29).

4. Assembly according to at least one of the preceding claims, wherein the comparison includes information on the feasibility of transfer of the hydraulic lifting device to the further position **characterised by** the parameters input and/or the lifting load raised or to be raised.

5. Assembly according to at least one of the preceding claims, wherein upon activation of the operating mode the first information are transmitted to the mobile control module (2).

6. Assembly according to at least one of the preceding claims, wherein a processor (9) of the mobile control module (2) calculates from the comparison and/or the first information graphic data for a display, displayable via a display unit (3) to a user.

7. Assembly according to claim 6, wherein the display takes place in the form of a signal indicator, a pictogram (P1, P2) or a text output.

8. Assembly according to at least one of the preceding claims, wherein the input of the parameters takes place via a mask (33) with input fields (37, 38, 39) on the mobile control module (2).

9. Assembly according to at least one of the preceding claims, wherein the parameters include the lifting height, the reach and the current or a freely-selectable lifting load.

10. Assembly according to at least one of the preceding claims, wherein the controller (1) has a further operating mode, in which the processor (8) of the controller (1) calculates a sequence of control commands for transferring the hydraulic lifting device to the position **characterised by** the parameters input.

11. Assembly according to claim 10, wherein the mobile control module (2) has further activation possibilities (28), operable by a user, for activating the calculation of the control commands.

12. Assembly according to at least one of claims 10 or 11, wherein the mobile control module (2) has operating possibilities (32), operable by a user, preferably a control lever, for controlling the issue of the control commands for transfer of the hydraulic lifting device to the position **characterised by** the parameters input.

13. Assembly according to claim 12, wherein the transfer takes place only as far as a position of the lifting device allowed according to the first information.

14. Assembly according to at least one of claims 12 or 13, wherein through the operating possibilities (32), preferably the control lever, the speed of transfer of the hydraulic lifting device into the position **characterised by** the parameters input is controllable.

15. Hydraulic lifting device, in particular a loading crane (14) for a vehicle (12), particularly preferably an articulated arm crane, or an aerial work platform, with an assembly according to at least one of the preceding claims.

## Revendications

1. Ensemble composé d'une commande (1) agencée ou à agencer sur un dispositif de levage hydraulique et d'un module de commande mobile (2), par l'intermédiaire duquel la commande (1) peut être commandée à distance, dans lequel des données de capteur peuvent être amenées à la commande (1) par l'intermédiaire d'entrées de signal (6, 7) et un processeur (8) de la commande (1) est conçu pour calculer, à partir de ces données de capteur et à partir de données spécifiques au dispositif de levage mises en mémoire dans une mémoire (30), des premières informations, lesquelles sont caractéristiques de la position actuelle du dispositif de levage - et éventuellement d'une charge de levage soulevée par le dispositif de levage -, dans lequel la commande (1) présente un mode de fonctionnement dans lequel des paramètres pour une autre position du dispositif de levage et/ou pour une charge de levage à soulever ou devant être soulevée par le dispositif de levage peuvent être entrées dans le module de commande mobile (2) et des deuxièmes informations, lesquelles sont caractéristiques d'une autre position et/ou de la charge de levage soulevée ou devant être soulevée par le dispositif de levage, sont calculées à partir de ces paramètres et des données mises en mémoire et comparées aux premières informations et/ou aux données spécifiques, dans lequel le calcul et la comparaison s'effectuent par l'intermédiaire du processeur (8) de la commande (1) et dans lequel le module de commande mobile (2) et la commande (1) communiquent l'un avec l'autre sans fil (10) et/ou de manière filaire (11).

2. Ensemble selon la revendication 1, dans lequel le module de commande mobile (2) présente des moyens d'activation (28) pour l'activation du mode de fonctionnement, lesquels peuvent être commandés par un utilisateur.

3. Ensemble selon au moins l'une des revendications 1 ou 2, dans lequel le module de commande mobile (2) présente un accumulateur d'énergie (29) et une activation du mode de fonctionnement ne peut s'effectuer que dans le cas d'un état de charge minimal de l'accumulateur d'énergie (29).

4. Ensemble selon au moins l'une des revendications précédentes, dans lequel la comparaison comporte des informations concernant la possibilité de réalisation d'une amenée du dispositif de levage hydraulique dans l'autre position **caractérisée par** les paramètres entrés et/ou la charge de levage soulevée ou à soulever.

5. Ensemble selon au moins l'une des revendications précédentes, dans lequel, lors d'une activation du mode de fonctionnement, les premières informations sont transmises au module de commande mobile (2).

6. Ensemble selon au moins l'une des revendications précédentes, dans lequel un processeur (9) du module de commande mobile (2) calcule à partir de la comparaison et/ou des premières informations des données graphiques pour une représentation, qui peuvent être représentées pour un utilisateur par l'intermédiaire d'une unité de représentation (3).

7. Ensemble selon la revendication 6, dans lequel la représentation s'effectue sous la forme d'un affichage de signal, d'un pictogramme (P1, P2) ou d'une sortie de texte.

8. Ensemble selon au moins l'une des revendications précédentes, dans lequel l'entrée des paramètres s'effectue dans le module de commande mobile (2) par l'intermédiaire d'un masque (33) présentant des champs d'entrée (37, 38, 39).

9. Ensemble selon au moins l'une des revendications précédentes, dans lequel les paramètres englobent la hauteur de levage, la portée et la charge de levage actuelle ou une charge de levage pouvant être choisie librement.

10. Ensemble selon au moins l'une des revendications précédentes, dans lequel la commande (1) présente un autre mode de fonctionnement, dans lequel une séquence d'instructions de commande destinées à amener le dispositif de levage hydraulique dans la position **caractérisée par** les paramètres entrés est calculée par le processeur (8) de la commande (1).

11. Ensemble selon la revendication 10, dans lequel le module de commande mobile (2) présente d'autres moyens d'activation (28) pour l'activation du calcul des instructions de commande, lesquels peuvent être commandés par un utilisateur.

12. Ensemble selon au moins l'une des revendications 10 ou 11, dans lequel le module de commande mobile (2) présente des moyens de commande utilisateur (32), de préférence un levier de commande utilisateur, destinés à commander la délivrance des instructions de commande pour l'amenée du dispositif de levage hydraulique dans la position **caractérisée par** les paramètres entrés, lesquels moyens peuvent être commandés par un utilisateur.

13. Ensemble selon la revendication 12, dans lequel l'amenée ne s'effectue que jusqu'à une position du dispositif de levage permise selon les premières informations.

14. Ensemble selon au moins l'une des revendications 12 ou 13, dans lequel les moyens de commande utilisateur (32), de préférence le levier de commande utilisateur, permettent de commander la vitesse de l'amenée du dispositif de levage hydraulique dans la position **caractérisée par** les paramètres entrés.

15. Dispositif de levage hydraulique, en particulier grue de chargement (14) pour un véhicule (12) - de manière particulièrement préférée grue à bras articulé - ou plateforme élévatrice, pourvu d'un ensemble selon au moins l'une des revendications précédentes.
